# EUROPÄISCHE PATENTANMELDUNG

(11) **EP 2 676 755 A1**
(43) Veröffentlichungstag der Anmeldung: **25.12.2013**
(21) Anmeldenummer: 12172692.1
(22) Anmeldetag: 20.06.2012
(51) Int. Cl.: B23G 1/22, B23B 31/12

(54) **Kraftspannfutter**

(71) Anmelder: SMW-AUTOBLOK Spannsysteme GmbH, 88074 Meckenbeuren (DE)
(72) Erfinder: Helm, Peter, D-88074 Meckenbeuren (DE); Deininger Harald, D-88048 Friedrichshafen (DE)
(74) Vertreter: Engelhardt & Engelhardt

(57) **Zusammenfassung**

Bei einem Kraftspannfutter (1) zur Abstützung von zylinderförmigen Werkstücken (4), die mittels einer Werkzeugmaschine im Bereich der freien Enden zu bearbeiten sind, bestehend aus
- einem Futterkörper (3), in dem in dessen Längsachse (2) eine Durchgangsöffnung (5) zur Aufnahme des Werkstückes (4) eingearbeitet ist, und
- aus mindestens drei Zentrierbacken (6), die in jeweils einer in dem Futterkörper (3) vorgesehene Führungsnut (7) radial bewegbar gelagert sind und die über ein Zwischenglied (11) mit einem gemeinsamen Antriebsmittel, beispielsweise einem hydraulisch oder pneumatisch betriebenen Kolben (10), in trieblicher Wirkverbindung stehen,
sollen Werkstücke (4) mit unterschiedlich groß bemessenen Druckmessern zentrierbar sein, ohne dass hierfür Umrüstungsmaßnahmen notwendig sind.

Dies wird dadurch erreicht, dass in dem Futterkörper (3) eine zu dessen Längsachse (2) und in Richtung des freien Endes des zu bearbeitenden Werkstückes (4) bzw. der Zentrierbacken (6) geneigte Führungsbohrung (12) eingearbeitet ist, dass das jeweilige Zwischenglied als Betätigungsbolzen (11) ausgestaltet ist, das in einer der Führungsbohrungen (12) verschiebbar gelagert ist und dass die jeweilige Zentrierbacke (6) an dem Betätigungsbolzen (11) in radialer Richtung relativ zu diesem verstellbar ist.

## Beschreibung

Die Erfindung bezieht sich auf ein Kraftspannfutter zur Abstützung von zylinderförmigen Werkstücken, die mittels einer Werkzeugmaschine im Bereich der freien Enden zu bearbeiten sind, gemäß des Oberbegriffes von Patentanspruch 1.

Solche Kraftspannfutter werden von der Patentanmelderin seit Jahrzehnten erfolgreich unter der Kennzeichnung Big Bore^{®} gefertigt und im Markt platziert. Diese Kraftspannfutter weisen eine sich in Längsachse des Kraftspannfutters erstreckende Durchgangsöffnung zur Aufnahme des zu bearbeitenden Werkstückes auf.

Um das zylinderförmige Werkstück möglichst exakt zentrisch zur Längsachse des Spannfutters zu positionieren, sind in dem Futterkörper des Spannfutters drei Zentrierbacken vorgesehen, die in Umfangsrichtung des Werkstückes jeweils in einem Abstand von 120° angeordnet sind und die synchron mit Hilfe eines Antriebskolbens in Richtung des Werkstückes zugestellt sind, so dass die Zentrierbacken gleichzeitig in Wirkkontakt mit dem Werkstück treten bzw. die Position des Werkstückes derart verändern, dass dieses nach dem die Zentrierbacken vollständig zugestellt sind, exakt zentrisch zu der Längsachse des Kraftspannfutter ausgerichtet ist.

Zu diesem Zweck sind die drei Zentrierbacken in einer Führungsnut radial verschiebbar gelagert, denn die axiale Zustellbewegung des Antriebsmittels in Form einer Kolbenstange wird mit Hilfe einer Keilstange umgelenkt, wenn die axiale Zustellbewegung beendet ist. Folglich entsteht eine axiale Zustellbewegung der Kolbenstange auf die Keilstange, und zwar möglichst in dem Bereich des freien Endes des zu bearbeitenden Werkstückes, um dieses im Raum zentrisch zur Längsachse zu fixieren, da in diesem Bereich eine Bearbeitung des Werkstückes erfolgt. Anschließend rutschen die Zentrierbacken auf der Keilstange in radialer Richtung ab und treten in Wirkkontakt mit dem Werkstück.

Nachdem das Werkstück mit Hilfe der drei Zentrierbacken zentrisch positioniert ist, werden drei in dem Spannfutter eingesetzte Spannbacken in Richtung des Werkstückes zugestellt, die zwischen den Zentrierbacken in dem Spannfutter angeordnet sind. Sobald die Spannbacken das positionierte Werkstück umgreifen, können die Zentrierbacken von dem Werkstück gelöst werden, um dieses zur Bearbeitung freizugeben. Solange die Zentrierbacken nämlich auf das Werkstück einwirken, ist dieses zur Bearbeitung nicht zugänglich. Die Spannbacken verlaufen daher in einer Ebene, die zu der von den Zentrierbacken gebildeten Ebene beabstandet ist.

Solche Kraftspannfutter haben sich in der Praxis zwar bewährt; es hat sich jedoch nachteiligerweise herausgestellt, dass für unterschiedlich groß bemessene Durchmesser der Werkstücke ein Austausch der Zentrierbacken oder des gesamten Kraftspannfutters vorzunehmen ist, denn der axiale Zustellweg sowie die radiale Bewegung der Zentrierbacken über die schiefe Ebene der Keilstange ist derart auszuwählen, dass die Zentrierbacken möglichst nahe an dem freien Ende des zu bearbeitenden Werkstückes in Wirkkontakt mit diesem gelangen. Solche Umrüstmaßnahmen sind zeit- und damit kostenintensiv, denn dadurch ist die Werkzeugmaschine für die Dauer der Umrüstung still gesetzt.

Es ist daher Aufgabe der Erfindung, ein Kraftspannfutter der eingangs genannten Gattung zur Verfügung zu stellen, mittels dem Werkstücke mit unterschiedlich großen Druckmessern zentrierbar sind, ohne dass hierfür Umrüstungsmaßnahmen notwendig sind, in dem der Zentrierbereich der Zentrierbacken bezogen auf die Längsachse des Kraftspannfutters in einem bestimmten Zentrier-Intervall einstellbar ist.

Diese Aufgabe ist erfindungsgemäß durch die Merkmale des kennzeichnenden Teils von Patentanspruch 1 gelöst.

Weitere vorteilhaft Weiterbildungen der Erfindung ergeben sich aus den Unteransprüchen.

Dadurch, dass zwischen dem Kolben und der jeweiligen Zentrierbacke ein Betätigungsbolzen vorgesehen ist und dadurch, dass in den Futterkörper eine in Richtung des zu zentrierenden Werkstückes geneigte Führungsbohrung eingearbeitet ist, in die der Betätigungsbolzen eingesetzt ist, und dadurch, dass die jeweilige Zentrierbacke an dem Betätigungsbolzen in radialer Richtung relativ zu diesem verstellbar ist, können die Zustellwege der Zentrierbacken in Richtung auf das Werkstück an den Durchmesser des Werkstückes angepasst werden bzw. der Wirkkontakt der Zentrierungsbacken auf der Werkstückoberfläche ist innerhalb eines vorgegebenen Zentrier-Intervalls variabel einstellbar. Desweitere ist es möglich aufgrund der konstruktiven Ausgestaltung des Kraftspannfutters und der Verstellmöglichkeiten der Zentrierbacken, diese an unterschiedlichen versetzten Positionen an der äußeren Mantelfläche des Werkstückes zur Anlage zu bringen.

Es ist besonders vorteilhaft, wenn der Betätigungsbolzen in einer Stabilisierungshülse teilweise verschiebbar zu dieser gelagert ist, die sich an der Innenwand der Führungsbohrung abstützt und teilweise die Bewegung des Betätigungsbolzen bis zu einem vorgegebenen Anschlag vollzieht, um anschließend stillgesetzt zu sein, so dass eine Relativbewegung zwischen dem Betätigungsbolzen und der Stabilisierungshülse entsteht. Durch die Stabilisierungshülse kann nämlich der Austrittsweg des Betätigungsbolzens aus dem Futterkörper erhöht werden, wodurch die Bewegungsfreiheit des Betätigungsbolzens und damit der Zentrierbacken vergrößert ist. Dies resultiert in dem Ergebnis, dass die Zentrierbacken bezogen auf die Mantelfläche des zu zentrierenden Werkstückes in einem vergrößerten Zentrier-Intervall auf das Werkstück einwirken können, und dass die Positionierung der Zentrierbacken bezogen auf das Werkstück in Abhängigkeit von dem Durchmesser des Werkstückes frei einstellbar sind.

In der Zeichnung sind zwei ein erfindungsgemäße Ausführungsbeispiele dargestellt, die nachfolgend näher erläutert sind. Im Einzelnen zeigt:
- Figur 1: ein erstes Ausführungsbeispiel eines Kraftspannfutters mit drei Zentrierbacken und drei Spannbacken, die benachbart zueinander in einem Futterkörper zur Zentrierung bzw. Abstützung eines zylinderförmigen Werkstückes angeordnet sind, in Vorderansicht,
- Figur 2a: das Kraftspannfutter gemäß Figur 1, im Schnitt und in der Ausgangsstellung,
- Figur 2b: das Kraftspannfutter gemäß Figur 1, im Schnitt und in einem ersten zentriertem Zustand des Werkstückes,
- Figur 2c: das Kraftspannfutter gemäß Figur 2b, in einem zweiten Zentrierzustand des Werkstückes,
- Figur 2d: das Kraftspannfutter gemäß Figur 2b, in einem dritten versetzten Zentrierzustand des Werkstückes,
- Figur 3: einen vergrößerten Teilausschnitt des Kraftspannfutters gemäß Figur 1 mit einem den Zentrierbacken zugeordneten Betätigungsbolzen und einem Kolben, zwischen denen ein Wälzlager in Form einer Rolle vorgesehen ist, in perspektivischer Ansicht, und
- Figur 4: ein zweites Ausführungsbeispiel eines Kraftspannfutters mit drei Zentrierbacken und drei Spannbacken, die benachbart zueinander in einem Futterkörper zur Zentrierung bzw. Abstützung eines zylinderförmigen Werkstückes angeordnet sind, im Schnitt.

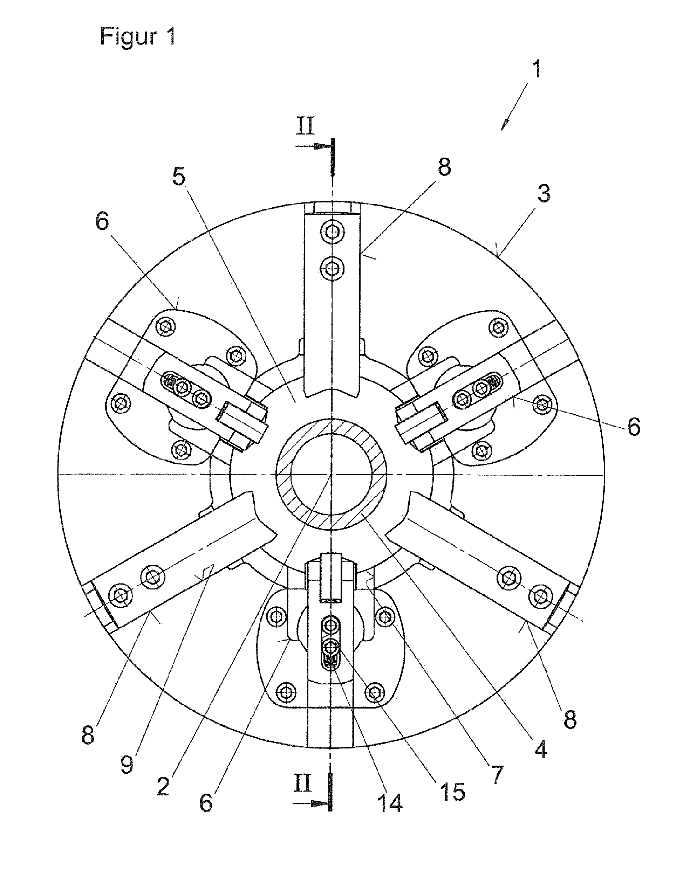

In Figur 1 ist ein Kraftspannfutter 1 zu entnehmen, durch das zylinderförmige Werkstücke 4, während diese von einer Werkzeugmaschine bearbeitet werden, abgestützt sind. Zur Aufnahme des jeweiligen Werkstückes 4 ist in einem Futterkörper 3 des Kraftspannfutters 1 eine Durchgangsöffnung 5 eingearbeitet, deren Zentrum fluchtend mit der Längsachse 2 des Kraftspannfutters 1 bzw. des Futterkörpers 3 verläuft.

Das Werkstück 4 soll insbesondere an deren freien Stirnseiten beispielsweise mit einem Außen- oder Innengewinde versehen werden.

Es ist erforderlich, das Werkstück 4 zunächst in einer zentrischen Position bezogen auf die Längsachse 2 des Futterkörpers 3 zu positionieren, um eine möglichst fehlerfreie Bearbeitung des Werkstückes 4 zu erreichen. Zu diesem Zweck sind in den Futterkörper 3 drei Zentrierbacken 6 eingesetzt, die jeweils in einer in dem Futterkörper 3 eingearbeiteten Führungsnut 7 radial beweglich gelagert sind. Sobald die zentrierte Position des Werkstückes 4 durch die Zustellung der drei Zentrierbacken 6 erreicht ist, werden die drei benachbart zu den Zentrierbacken 6 angeordneten Spannbacken 8 radial in Richtung des einzuspannenden Werkstückes 4 zugestellt. Auch die jeweilige Spannbacken 8 ist in einer in dem Futterkörper 3 eingearbeiteten Führungsnut 9 radial verschiebbar gelagert Sobald die drei Spannbacken 8 das zentrierte Werkstück 4 umgreifen und halten, können die drei Zentrierbacken 6 in die Ausgangsstellung zurückgefahren werden, um den Bereich des Werkstückes 4 freizugeben, der zu bearbeiten ist.

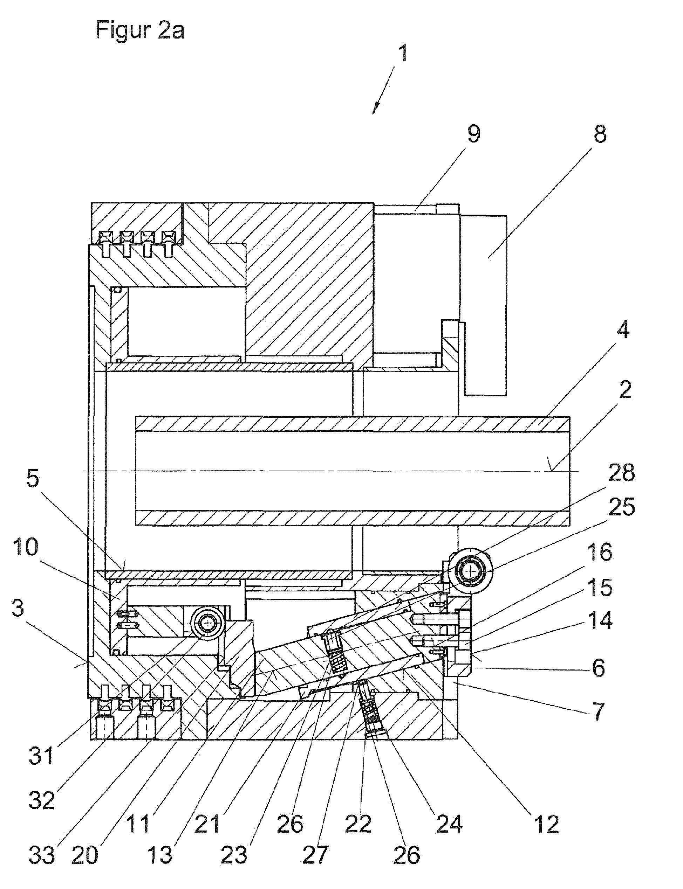

In Figur 2a ist die Ausgangsstellung der Zentrierbacken 6 gezeigt. Die drei Zentrierbacken 6 sind trieblich mit einem Kolben 10 verbunden, der beispielsweise pneumatisch oder hydraulisch in axialer Richtung, also parallel zu der Längsachse 2, verstellbar ist. Dadurch werden die Zentrierbacken 6 synchron betätigt und üben auf das zu zentrierend Werkstück 4 eine gleichmäßige in Umfangsrichtung verteilte Zentrierkraft auf dieses aus, so dass das Werkstück 4 zumindest in der Zentrierebene und benachbart dazu derart positioniert ist, dass die Längsachse des Werkstückes 4 fluchtend zu der Längsachse 2 des Futterkörpers 3 ausgerichtet ist.

Zwischen der jeweiligen Zentrierbacke 6 und dem Kolben 10 ist zudem ein Betätigungsbolzen 11 als Zwischenglied vorgesehen, der in eine in dem Futterkörper 3 eingearbeitete Führungsbohrung 12 eingesetzt ist. Die Führungsbohrung 12 verläuft dabei geneigt zu der Längsachse 2, und zwar derart, dass der Abstand der Längsachse 13 der Führungsbohrung 12 im Bereich der Zentrierbacken 6 kleiner bemessen ist als der Abstand der Führungsbohrung 12 von der Längsachse 2, die dem Kolbens 10 zugewandt ist. Somit sind die drei in dem Futterkörper 3 eingearbeiteten Führungsbohrungen 12 in der Querschnittsebene trichter- oder V-förmig angeordnet. Der Neigungswinkel der Längsachse 13 der jeweiligen Führungsbohrung 12 und der Längsachse 2 beträgt zwischen 20° und 45°.

Um den Abstand zwischen dem freien Ende der Zentrierbacke 6 und dem zu zentrierenden Werkstück 4 einstellen zu können, ist in die jeweilige Zentrierbacken 6 ein Langloch 14 eingearbeitet, in das Befestigungsschrauben 15 eingesetzt sind, die in einem in dem Betätigungsbolzen 11 eingearbeiteten Gewindebohrungen 16 eingeschraubt sind. Die Länge des jeweiligen Langlochs 14 liegt etwa zwischen einem Drittel und zwei Drittel der Länge der Zentrierbacken 6, so dass in diesem Bereich die Zentrierbacke 6 an dem Betätigungsbolzen 11 variabel positionierbar ist. Mittels des Betätigungsbolzen 11 ist die jeweilige Zentrierbacke 6 geführt gehalten.

Des Weiteren ist zwischen dem Betätigungsbolzen 11 und der Innenwand der Führungsbohrung 12 eine Stabilisierungshülse 21 eingesetzt, die dazu dient, den aus dem Futterkörper 3 ausgefahrenen Betätigungsbolzen 11 abzustützen, so dass der Ausfahrweg des Betätigungsbolzen 11 aus dem Futterkörper 3 vergrößert werden kann, da durch die Stabilisierungshülsen 21 im auskragendem Zustand abstützbar sind.

Die Stabilisierungshülse 21 tritt demnach teilweise aus der von dem Futterkörper 3 gebildeten Ebene heraus.

Die Bewegung der Stabilisierungshülse 21 relativ zu dem Futterkörper 3 und dem Betätigungsbolzen 11 ist mittels zweier Raststifte 24 und 25 bewerkstelligt. Der Raststift 24 ist dabei in eine in dem Futterkörper 3 eingearbeitete Bohrung 22 eingesetzt und liegt auf der Oberfläche der Stabilisierungshülse 21 auf. In die Bohrung 22 ist des Weiteren eine Schraubendruckfeder 26 eingesetzt, durch die der Raststift 24 unter Vorspannung in der Bohrung 22 steht.

Gegenüberliegend, jedoch seitlich versetzt zu dem Raststift 24, ist der Raststift 25 in einer in dem Betätigungsbolzen 11 eingearbeiteten Bohrung 23 eingesetzt. Der Raststift 25 wird mittels der Schraubendruckfeder 26 aus dem Betätigungsbolzen 11 auf die Innenmantelfläche der Stabilisierungshülse 21 unter Vorspannung zur Anlage gebracht. In die Innenmantelfläche der Stabilisierungshülse 21 ist eine Kerbe 28 eingearbeitet, in die der Raststift 25 in der Ausgangsposition der Zentrierbacken 6 eingreift, so dass eine form- oder kraftschlüssige Wirkverbindung zwischen dem Raststift 25 und der Stabilisierungshülse 21 vorliegt. Der auf die Außenmantelfläche der Stabilisierungshülse 21 einwirkende Raststift 24 liegt gleitend auf dieser auf, so dass eine auf den Betätigungsbolzen 11 einwirkende axiale Zustellkraft dazu führt, dass der Betätigungsbolzen 11 und die Stabilisierungshülse 21 gleichzeitig verschoben sind. Erst wenn der im Futterkörper 3 eingesetzte Raststift 24 in eine in die Außenmantelfläche der Stabilisierungshülse 21 eingearbeitete Kerbe 27 eintaucht, entsteht dort eine form- oder kraftschlüssige Wirkverbindung zwischen der Stabilisierungshülse 21 und dem Futterkörper 3, die dazu führt, dass die Bewegung der Stabilisierungshülse 21 festgesetzt ist und anschließend eine Relativbewegung zwischen dem Betätigungsbolzen 11 und der Stabilisierungshülse 21 stattfindet, um den Betätigungsbolzen 11 und damit die Zentrierbacke 6 weiter von dem Futterkörper 3 zu entfernen. Die Wirkverbindung zwischen dem Raststift 25 und der Stabilisierungshülse 21 ist dann gelöst, so dass der Raststift 25 auf der Innenmantelfläche der Stabilisierungshülse entlang gleitet.

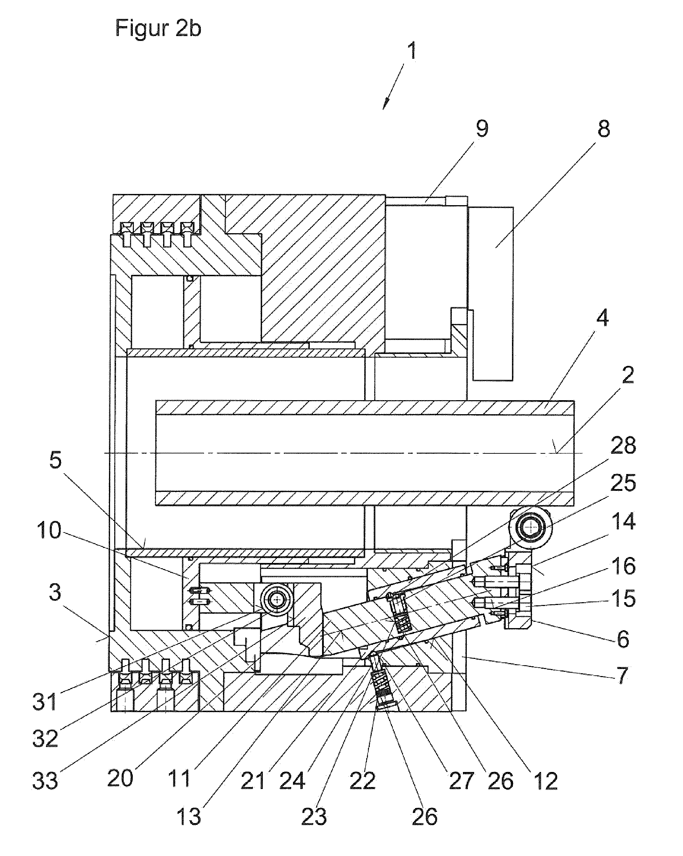

Des Weiteren ist an dem dem Kolben 10 zugewandten freien Ende des Betätigungsbolzens 11 ein Übertragungskörper 20 angeschraubt, der jedoch auch mit dem Betätigungsbolzen 11 aus einem gemeinsamen Werkstoff gefertigt werden kann, so dass der Betätigungsbolzen 11 und der Übertragungskörper 20 als einteiliges Bauteil ausgestaltet sind. Der Übertragungskörper 20 weist eine dem Kolben 10 zugewandte Anlagefläche 33 auf, die senkrecht zu der Längsachse 2 ausgerichtet ist. Zwischen der Anlagefläche 33 und dem Kolben 10 ist ein Wälzlager 31 in Form einer Rolle 32 angeordnet, durch die die axiale Betätigungskraft des Kolbens 10 auf die Anlagefläche 33 übertragen ist, um gleichzeitig bei der axialen Verstellung des Betätigungsbolzens 11 eine ausgleichende Relativbewegung zwischen der Anlagefläche 33 in der senkrecht zu der Längsachse 2 verlaufende Ebene erfolgen kann, denn die Anlagefläche 33 bewegt sich, wie dies insbesondere in Figur 2b dargestellt ist, während der Zustellbewegung des Kolbens 10 in Richtung der Längsachse 2. Das Wälzlager 31 kann auch als Gleitlager ausgestellt sein.

Des Weiteren ist in Figur 2b zu erkennen, dass der Raststift 25 nunmehr in die Kerbe 27 eintaucht und die Stabilisierungshülse 21 festgesetzt hat. Die Zentrierbacken 6 stehen nunmehr im Wirkkontakt mit dem Werkstück 4 und zentrieren dieses.

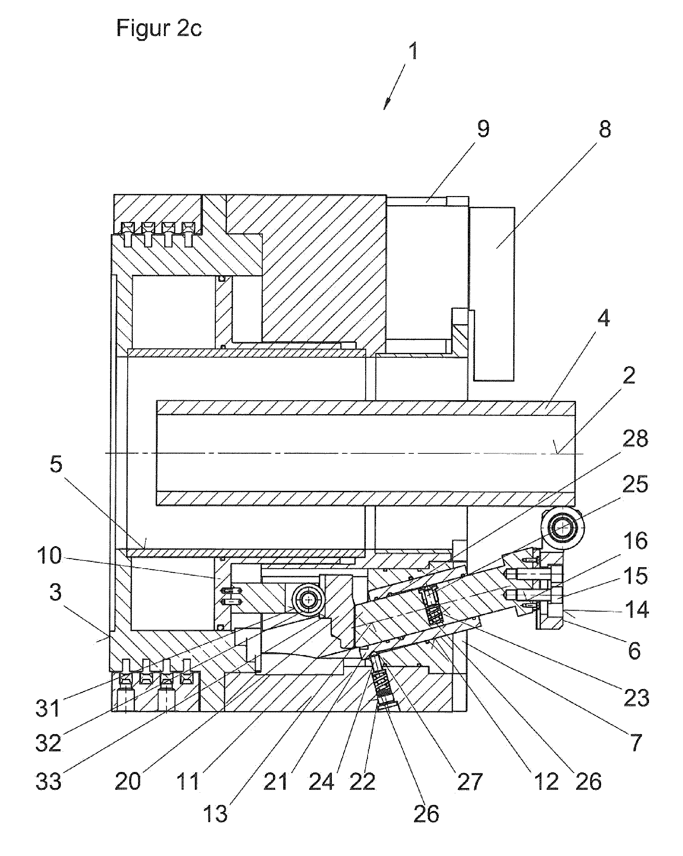

Figur 2c ist zu entnehmen, dass die Anlageebene der Zentrierbacken 6 versetzt ist zu der Anlageebene in Figur 2b, da die Zentrierbacken 6 an einem äußeren Anlagepunkt des Langlochs 13 mit dem Betätigungsbolzen 11 verbunden sind, wohingegen in Figur 2b die Zentrierbacken 6 in einer Mittelposition bezogen auf das Langloch 13 mit dem Betätigungsbolzen 11 verbunden sind.

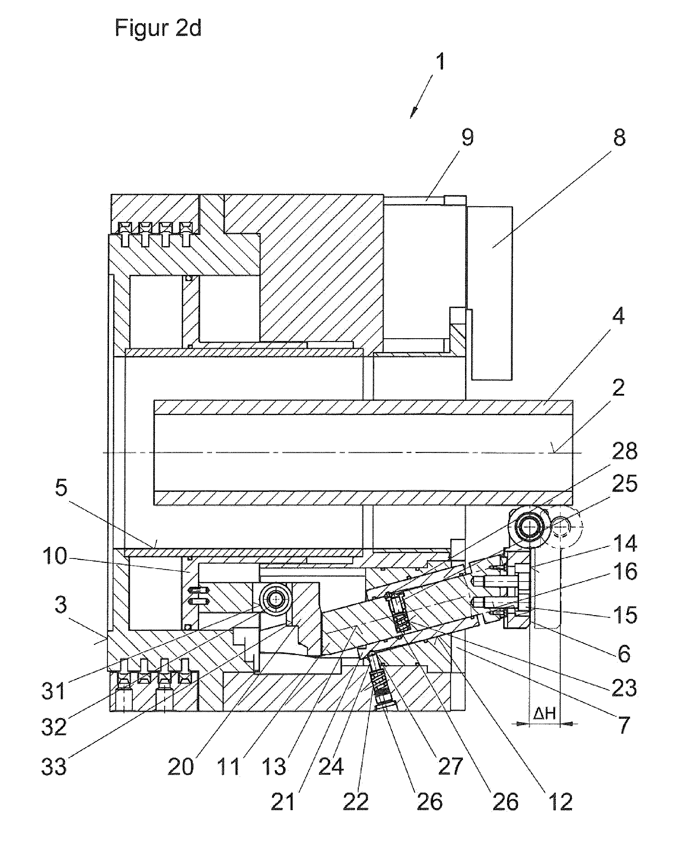

In Figur 2d ist ersichtlich, dass die Anlageebene der Zentrierbacken 6 an dem Werkstück 4 versetzt zu der Anlageebene in Figur 2c verläuft, wenn die Zentrierbacke 6 in einer äußeren Position bezogen auf das Langloch 13 mit dem Betätigungsbolzen 11 verbunden sind.

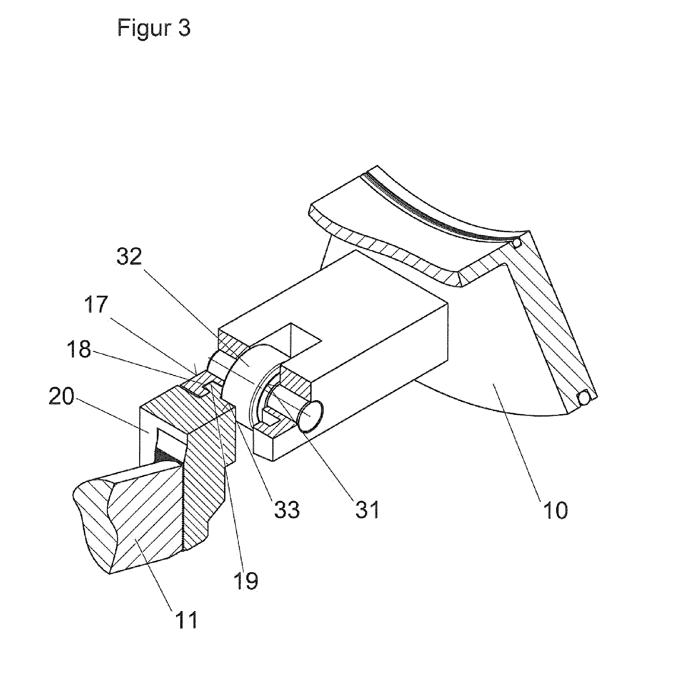

Figur 3 ist zu entnehmen, wie die Zentrierbacken 6 aus der zentrierten Position mit Hilfe des Kolbens 10 zurückgezogen werden und wie die Rolle 32 befestigt ist. Zunächst ist zwischen dem freien Ende des Kolbens 10 und dem Betätigungsbolzen 11 ein Nutenstein 17 vorgesehen, der gleitend im Inneren des Futterkörpers 3 angeordnet ist. Der Nutenstein 17 weist zwei beabstandet und parallel zueinander verlaufende Führungsöffnungen 18 auf, die vorteilhafterweise im Querschnitt U-förmig ausgestaltet sind. An den Kolben 10 und den Betätigungsbolzen 11 ist jeweils eine rechteckförmige Nase 19 angeformt, die in die Führungsöffnungen 18 des Nutensteins 17 axial verschiebbar gelagert sind.

Die Rolle 32 des Wälzlagers 31 ist drehbar in dem Nutenstein 17 angeordnet und liegt auf der Anlagefläche 33 des Betätigungsbolzens 11 bzw. des Übertragungskörpers 20 auf. Sobald nunmehr die Rückstellung des Kolbens 10 erfolgt, führt die vorliegende kraftschlüssige Wirkverbindung zwischen dem Kolben 10 und dem Betätigungsbolzen 11 dazu, dass die Rückstellbewegung des Kolbens 10 die Rückstellung des Betätigungsbolzens 11 bewirkt.

Sobald die Zentrierbacken 6 an die nach außen abstehende freie Stirnseite der Stabilisierungshülse 21 anschlagen, wird auch die Stabilisierungshülse 21 über die Rückstellkraft des Kolbens 10 zurückgezogen, so dass sich die Rastverbindung zwischen der Stabilisierungshülse 21 und dem Futterkörper 3 durch den Raststift 24 aufgehoben und die Stabilisierungshülse 21 erneut gemeinsam mit dem Betätigungsbolzen 11 zurückgestellt ist.

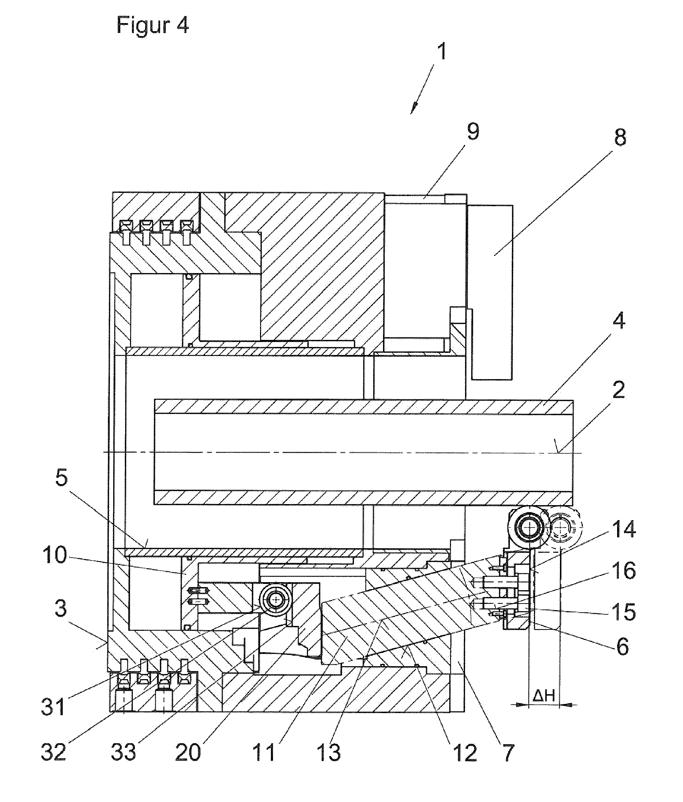

Die in Figur 4 dargestellte Ausführungsvariante des Kraftspannfutters 1 geht von dem Erfindungsprinzip aus, dass der Betätigungsbolzen 11 auch unmittelbar in der Führungsbohrung 12 des Futterkörpers 3 relativ zu diesem bewegbar abgestützt werden kann. Die insbesondere in den Figuren 2a bis 2d vorgesehene Stabilisierungshülse 21 ist bei dieser Ausführungsvariante nicht erforderlich. Vielmehr gleitet oder rutscht der Betätigungsbolzen 11 unmittelbar im Inneren der Führungsbohrung 12 in Abhängigkeit von der Bewegung des Kolbens 10 hin und her, wie dies bereits vorstehend im Einzelnen erläutert wurde.

Die Begrenzung des Verstellweges des Betätigungsbolzens 11 erfolgt für alle Ausführungsvarianten durch die Begrenzung des axialen Hubweges des Kolbens 10.

## Patentansprüche

1. Kraftspannfutter (1) zur Abstützung von zylinderförmigen Werkstücken (4), die mittels einer Werkzeugmaschine im Bereich der freien Enden zu bearbeiten sind, bestehend aus
- einem Futterkörper (3), in dem in dessen Längsachse (2) eine Durchgangsöffnung (5) zur Aufnahme des Werkstückes (4) eingearbeitet ist, und
- aus mindestens drei Zentrierbacken (6), die in jeweils einer in dem Futterkörper (3) vorgesehene Führungsnut (7) radial bewegbar gelagert sind und die über ein Zwischenglied (11) mit einem gemeinsamen Antriebsmittel, beispielsweise einem hydraulisch oder pneumatisch betriebenen Kolben (10), in trieblicher Wirkverbindung stehen,
**dadurch gekennzeichnet,**
**dass** in dem Futterkörper (3) eine zu dessen Längsachse (2) und in Richtung des freien Endes des zu bearbeitenden Werkstückes (4) bzw. der Zentrierbacken (6) geneigte Führungsbohrung (12) eingearbeitet ist, dass das jeweilige Zwischenglied als Betätigungsbolzen (11) ausgestaltet ist, das in einer der Führungsbohrungen (12) verschiebbar gelagert ist und dass die jeweilige Zentrierbacke (6) an dem Betätigungsbolzen (11) in radialer Richtung relativ zu diesem verstellbar ist.

2. Kraftspannfutter nach Anspruch 1,
**dadurch gekennzeichnet,**
**dass** der axiale Verstellweg des Betätigungsbolzens (11) mittels einer Anschlagfläche (33) oder durch den axiellen Hubweg des Antriebsmittels (15) begrenzt ist.

3. Kraftspannfutter nach Anspruch 1 oder 2,
**dadurch gekennzeichnet,**
**dass** zwischen dem Betätigungsbolzen (11) und der Führungsbohrung (12) eine Stabilisierungshülse (21) vorgesehen ist, und dass die Länge der Stabilisierungshülse (21) bezogen auf die Länge des Betätigungsbolzens (11) kleiner bemessen ist als dieser.

4. Kraftspannfutter nach Anspruch 3,
**dadurch gekennzeichnet,**
**dass** in dem Betätigungsbolzen (11) eine Bohrung (22) eingearbeitet ist, die senkrecht zu der Längsachse (13) des Betätigungsbolzens (11) verläuft, dass in die Bohrung (22) ein Raststift (24) und eine Schraubendruckfeder (26) eingesetzt ist, durch die der Raststift (24) in Richtung auf die innere Mantelfläche der Stabilisierungshülse (21) gedrückt ist, und dass in die innere Mantelfläche der Stabilisierungshülse (21) eine Kerbe (27) eingearbeitet ist, in die der Raststift (24) eingreift, derart, dass eine form- oder kraftschlüssige Wirkverbindung zwischen dem Betätigungsbolzen (11) und der Stabilisierungshülse (21) gebildet ist.

5. Kraftspannfutter nach Anspruch 3 oder 4,
**dadurch gekennzeichnet,**
**dass** in dem Futterkörper (3) eine Bohrung (23) eingearbeitet ist, die senkrecht zu der Längsachse (13) des Betätigungsbolzens (11) verläuft, dass in die Bohrung (23) ein Raststift (25) und eine Schraubendruckfeder (26) eingesetzt ist und dass in die äußere Mantelfläche der Stabilisierungshülse (21) eine Kerbe (28) eingearbeitet ist, in die der Raststift (25) eingreift, derart, dass eine form- oder kraftschlüssige Wirkverbindung zwischen der Stabilisierungshülse (21) und dem Futterkörper (3) gebildet ist.

6. Kraftspannfutter nach einem der vorgenannten Ansprüche,
**dadurch gekennzeichnet,**
**dass** zwischen dem Kolben (10) und dem diesen zugewandten freien Ende des Betätigungsbolzens (11) ein Wälzlager (31), vorzugsweise in Form einer Rolle (32), oder ein Gleitlager, vorgesehen ist, dass an dem freien Ende des Betätigungsbolzens (11) eine senkrecht zu der Längsachse (2) des Futterkörpers (3) verlaufende Anlagefläche (33) angearbeitet ist, dass die Anlagefläche (33) und die Rolle (32) bzw. das Gleitlager derart zusammenwirken, dass die axialen Bewegungen des Kolbens (10) von der Rolle (32) auf die Anlagefläche (35) des Betätigungsbolzens (11) übertragen sind und dass gleichzeitig eine senkrecht zu der Längsachse (2) des Futterkörpers (3) ausgerichtete Relativbewegung zwischen der Anlagefläche (33) des Betätigungsbolzens (11) und dem Wälzkörper (31), der Rolle (32) bzw. dem Gleitlager freigegeben ist.

7. Kraftspannfutter nach einem der vorgenannten Ansprüche,
**dadurch gekennzeichnet,**
**dass** in jede der Zentrierbacken (6) ein Langloch (14) eingearbeitet ist, das im montiertem Zustand senkrecht zu der Längsachse (2) des Futterkörpers (3) verläuft, dass die Zentrierbacken (6) mittels einer oder mehrerer Befestigungsschrauben (15) an dem Betätigungsbolzen (11) arretierbar sind und dass die Befestigungsschrauben (15) das Langloch (14) durchgreifen und die in eine in den Betätigungsbolzen (11) eingearbeiteten Gewindebohrung (16) abgestützt sind.

8. Kraftspannfutter nach Anspruch 7,
**dadurch gekennzeichnet,**
**dass** die Länge des Langlochs (14) der jeweiligen Zentrierbacke (6) zwischen 1/3 und 2/3 der Länge der Zentrierbacken (6) entspricht.

9. Kraftspannfutter nach einem der vorgenannten Ansprüche,
**dadurch gekenntzeichnet,**
dass zwischen dem Kolben (10) und dem Betätigungsbolzen (11) ein Nutenstein (17) vorgesehen ist, dass in den Nutenstein (17) zwei zueinander beabstandet und parallel verlaufende Führungsöffnungen (18) eingearbeitet sind und dass an dem Kolben (10) und dem Betätigungsbolzen (11) angeformte Nasen (19) in die jeweilige Führungsöffnung (18) eingesetzt und in dieser verschiebbar gelagert sind.

10. Kraftspannfutter nach Anspruch 9,
**dadurch gekennzeichnet,**
**dass** die Rolle (32) an dem Nutenstein (17) zwischen den beiden Führungsöffnungen (18) angeordnet ist.
